# EUROPEAN PATENT SPECIFICATION

(11) **EP 4 037 529 B1**
(45) Date of publication and mention of the grant of the patent: **07.01.2026**
(21) Application number: 20835861.4
(22) Date of filing: 02.10.2020
(51) Int. Cl.: A47J 31/40

(54) **BABY FORMULA MAKING DEVICE, AND METHOD FOR MAKING BABY FORMULA**
VORRICHTUNG ZUR HERSTELLUNG VON BABYNAHRUNG UND VERFAHREN ZUR HERSTELLUNG VON BABYNAHRUNG
DISPOSITIF DE PRÉPARATION DE FORMULE POUR BÉBÉ ET PROCÉDÉ DE FABRICATION DE FORMULE POUR BÉBÉ

(30) Priority: 03.10.2019 HU 1900345
(43) Date of publication of application: 10.08.2022
(73) Proprietor: X-Plast Kft., 8000 Székesfehérvár (HU)
(72) Inventor: SERES, Viktor, 8000 Székesfehérvár (HU)
(74) Representative: Kereszty, Marcell
(86) International application number: PCT/HU2020/050042
(87) International publication number: WO 2021/064435

(56) References cited:
- WO-A1-2006/066339
- WO-A1-2006/066339
- SE-A1- 1 551 632
- SE-A1- 1 551 632
- US-A1- 2006 007 781
- US-A1- 2006 007 781
- US-B2- 9 648 977
- US-B2- 9 648 977

## Description

### TECHNICAL FIELD

The invention primarily relates to a baby formula making device. The invention further relates to a method for making baby formula.

### BACKGROUND ART

In the early life stages of infants proper nutrient intake is crucially important for development. Breast milk contains a perfect combination of the necessary nutrients; however, in countless cases breast milk is either not available, or is only available in insufficient quantities. The first baby formula adapted to replace breast milk was marketed in 1867 by Henri Nestlé, contributing to a significant reduction of infant mortality. Shortage of breast milk is a widespread problem even today. According to UNICEF data, on average 6 out of 10 infants cannot be fed exclusively with the breast milk of their mother; this ratio is even higher in the USA, China, and in many European countries.

Babies are usually fed various baby formula preparations up to the age of 1, the formulas containing, like breast milk, all the necessary nutrients, minerals and vitamins that are required at that particular stage of development. Although the daily routine of babies varies greatly for each individual, it can be generally maintained that it is recommended to feed them 6-8 times a day, which requires a lot of preparation time. In the case of breast-feeding, breast milk is available right at the appropriate temperature, providing nutrients at the perfect ratio; however, preparing a single portion of baby formula takes as much as 5-15 minutes even for experienced parents - this is because the process of boiling the water and then cooling it to body temperature, measuring the exact amounts of formula powder and water, and dissolving the formula powder in the water cannot be carried out more quickly than that.

In the majority of commercially available baby formula making devices currently being marketed the formula and the water are mixed inside the device, i.e. it is the already prepared (mixed), ready-to-consume baby formula that is dispensed to a container, preferably a baby bottle. A common drawback of these technical solutions is that the mixing chamber of the device has to be cleaned and sterilized after each use to prevent pathogens from proliferating in the residual prepared baby formula remaining in the device. Regular cleaning has a significant time cost that could even surpass the time cost of preparing baby formula without using a baby formula making device.

In document US 2016/0317984 A1 an apparatus is disclosed for preparing baby formula from concentrate by adding water. The concentrate is delivered to a mixing chamber by a motor, followed by injecting water by spray jets into the mixing chamber and finally dispensing the mixed baby formula. The concentrate container may comprise a thin, sterile permeable membrane. The apparatus can also be used together with "smart" baby bottles, for example with baby bottles comprising unique identifiers that can be assigned to particular babies; furthermore, dispensing of the mixed baby formula is started only when the apparatus detects that a baby bottle is placed under the dispensing outlet. The apparatus may also be complemented by a software application or user interface. This solution also has the disadvantage that it is necessary to regularly clean the mixing chamber.

The prior art also includes devices that do not mix the formula and the water inside the device but feed them separately into a container, preferably into a baby bottle.

In the device according to document US 5,570,816 dry, powdered formula and water are fed directly into the baby bottle, while the further steps, for example closing off the baby bottle and mixing (shaking) its contents have to be performed by the user. Upon pressing a button, the water previously filled in the water tank of the device is first sterilized by boiling, then cooled to 100°F (37.8°C) and fed into the baby bottle. After dispensing the water, an appropriate amount of formula is fed into the baby bottle by pressing the button a second time. The device comprises a measuring and dispensing unit for measuring the required amount of formula, the device having two sides, one side being fully filled with formula while the other being empty. When the button is pressed for the second time, the unit rotates by 180 degrees, filling up the empty side, while releasing the contents of the fully filled side into a funnel adapted to deliver the formula into the baby bottle. This technical solution has the disadvantage that it does not provide for mixing the water and the formula powder, i.e. the mixing operation has to be performed manually by the user, while, on the other hand the amount of dispensed formula cannot be adjusted according to demand.

In a similar manner, in the apparatus disclosed in document US 6,829,431 B1 dry, powdered formula and water (at an appropriate amount and temperature) are fed separately to the baby bottle; wherein the baby bottle is supported and transferred to the water dispensing unit by a transfer arm. The powdered formula dispensing mechanism comprises a weight on a top side of the formula container and a blade arranged below it adapted for dispensing the required amount of formula by a rotating motion. A disadvantage of this technical solution is that the milk bottle has to be closed off and the water and the formula have to be mixed manually, by the user.

Documents US 2011/0209625 A1 and US 8,210,099 B2 disclose apparatuses wherein water and formula are fed separately into a baby bottle, and wherein water is cooled to a desired temperature after previously being boiled. In document US 2011/0209625 A1 hot water is cooled by applying heat sinks and fans, while in document US 8,210,099 B2 Peltier cooling is also applied. According to document US 2011/0209625 A1, the water and formula filled in the baby bottle have to be mixed by the user; document US 8,210,099 B2 gives no teaching on the mixing of the water and the formula. Like with the above solutions, the drawbacks of these technical solutions are that mixing has to be performed manually, and that boiling and subsequently cooling off the water has a significant time cost.

In the apparatus disclosed in document US 9,022,081 B2, dry, powdered formula and heated-up water are also fed separately to the baby bottle. For storing the formula, the apparatus comprises a disc including a plurality of chambers that are configured as cylinders open at both ends and can be filled with formula one-by-one. Under the disc holding the formula a plate is arranged that keeps the formula inside the chambers until a dispensing hole is moved under the chamber; the formula previously filled into the chamber then falls through the dispensing hole into the baby bottle. The apparatus is able to mix the formula and the water filled into the baby bottle in three different ways: by shaking, by rotation, or by means of an arm that moves the baby bottle in an elliptical manner. During the shaking and rotation only the base portion of the baby bottle is retained. The apparatus is able to produce a signal when the prepared baby formula is ready, and when the time comes for the next feeding.

The apparatus disclosed in document US 9,131,800 B2 is adapted for supplying predetermined amounts of dry, powdered formula and heated water (boiled and cooled-off) into a baby bottle. The required amount of formula is fed by a screw from the bottom of the formula container to the baby bottle through an opening, which opening is closed off by magnets after the formula has been dispensed and when the apparatus is not in use. It is a disadvantage that, also in this case, the ingredients in the baby bottle have to be mixed by the user, for example by using a spoon.

In the apparatus disclosed in document US 9,648,977 B2 powdered formula and liquid are also fed separately into the baby bottle, and are then mixed in the baby bottle. Mixing can be achieved by applying various rotations. From the formula container the formula is fed into a dosing tube, followed by supplying (by shaking) the formula held in the dosing tube into the milk bottle through a valve, for example a pinch valve. First, the formula is dissolved in warm water, followed by diluting it with cold water to the desired concentration and temperature in the baby bottle. During the rotation only the base portion of the baby bottle is retained, wherein the baby bottle is held at a fixed angle relative to the vertical direction, which may result in the formula being prepared being splashed out of the bottle, contaminating the apparatus. Due to the baby formula splashed out from the baby bottle the apparatus has to be cleaned before the next use.

### DESCRIPTION OF THE INVENTION

In light of the known technical solutions there is a need for providing a baby formula making device that is suited for making ready-to-consume baby formula in a simple manner, quickly and with minimal user intervention, thereby shortening the time required for making the baby formula.

The object of the technical solution according to the invention is to provide a baby formula making device that eliminates the drawbacks of prior art solutions to the greatest possible extent.

The primary object of the invention is to provide a baby formula making device that is suited for preparing ready-to-consume baby formula in a simple manner, quickly and with minimal user intervention, removing the need for the regular cleaning and disinfection of the baby formula making device.

Another object of the invention is to provide a baby formula making device that implements the mixing of appropriately dosed amounts of water and formula outside of the device.

A still further object of the invention is a method for producing custom amounts of ready-to-consume baby formula.

The objects according to the invention have been achieved by the baby formula making device according to claim 1, and the method according to claim 10. Preferred embodiments of the invention are defined in the dependent claims.

The advantage of the technical solution according to the invention is that the formula is mixed with water outside of the device, so it is not necessary to clean and sterilize the device after each use because no residual baby formula (that would be prone to spoilage) is left therein.

We have recognised that by connecting a neck portion of a baby formula container, for example a baby bottle to the device, dispensing and mixing of the formula and the water can be performed inside a closed system, so the contamination of the prepared baby formula can be prevented.

Furthermore, we have recognised that by applying rotation to the baby formula container its contents, i.e. the formula and water fed therein in appropriate amounts can be mixed successfully, thereby producing a baby formula with an optimal consistency. We have also recognised that splashing or spilling of the baby formula during the mixing operation is to be avoided because any residue of baby formula on the device necessitates a cleaning of the device, so the baby formula is prepared by mixing that does not comprise shaking, but solely rotation.

We have also recognised that boiling the water required for preparing the baby formula and subsequently cooling it to the required temperature involves significant loss of time. Using sterilized water or special "baby water" intended to be consumed by babies allows that - instead of boiling and then cooling the water - the sterilized water can be heated only to body temperature, which significantly reduces the time required for preparing the ready-to-consume baby formula. Also, there is no risk that the sterilized water stored inside the closed system implemented in the device will be contaminated.

### BRIEF DESCRIPTION OF THE DRAWINGS

Preferred embodiments of the invention are described below by way of example with reference to the following drawings, wherein
Fig. 1 is a perspective view of a preferred embodiment of the baby formula making device according to the invention,
Fig. 2 shows a sectional view of the baby formula making device according to Fig. 1,
Fig. 3 shows a side view of the baby formula making device according to Fig. 1,
Fig. 4 shows a side view of the baby formula making device according to Fig. 1 without the cover portions,
Fig. 5 shows a side view of the baby formula making device according to Fig. 3 without the water tank and the formula container,
Fig. 6 is another perspective view of the baby formula making device according to Fig. 1,
Fig. 7 shows a perspective view of the baby formula making device according to Fig. 5 without the cover portions,
Fig. 8 shows a perspective view of the baby formula making device according to Fig. 6 without the water tank and the formula container,
Fig. 9 shows yet another perspective view of the baby formula making device according to Fig. 1,
Fig. 10 is a drawing showing a perspective front view of the baby formula making device according to Fig. 1,
Fig. 11 is a perspective view of a preferred embodiment of the baby formula container,
Fig. 12 is a perspective view of another preferred embodiment of the baby formula container, and
Fig. 13 is a diagram illustrating a preferred rotational speed curve of the motor of the baby formula making device according to the invention.

### MODES FOR CARRYING OUT THE INVENTION

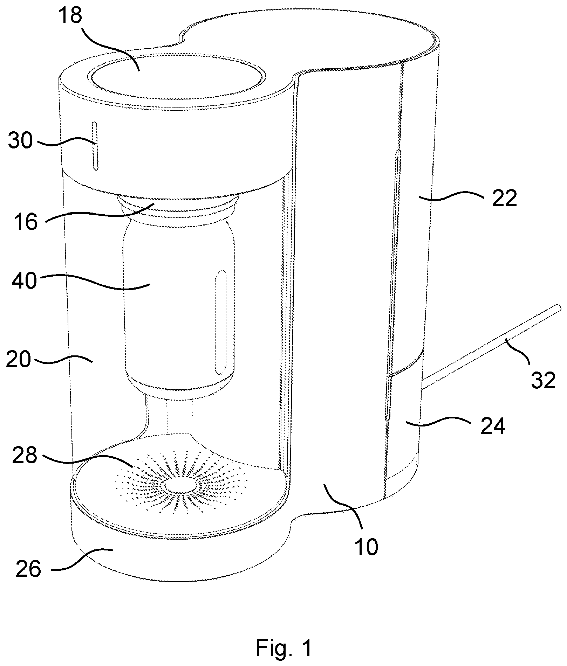

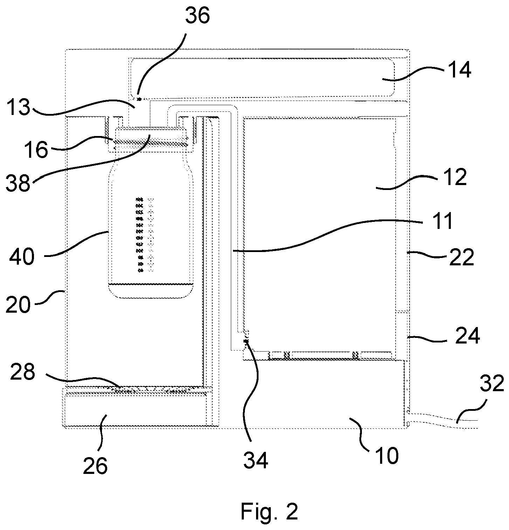

In Fig. 1 there can be seen a perspective view of a preferred embodiment of the baby formula making device according to the invention. The baby formula making device that is shown in Fig. 2 in sectional view comprises a water tank 12 receiving sterilized water, a heating unit (not shown) adapted for heating the water received in the water tank 12, a formula container 14 adapted for storing formula, and a feed opening 38 adapted for feeding the heated water and the formula directly into a baby formula container 40 (for example, into a container portion of a baby or formula bottle), the feed opening 38 being depicted in more detail in Fig. 2.

In the context of the present description, the term "formula" is used to refer to nutritional preparations for infants, babies or kids, i.e. infant formula (for replacing breast milk), instant drinks or drink concentrates for babies or small children. In the context of the present description, the term "baby formula" is used to refer to ready-to-consume products, for example ready-to-consume infant- or baby formula or drinks, preferably made by adding water or other liquids at the appropriate ratio corresponding to the type of the formula.

In the preferred embodiment depicted in the figure, the baby formula making device comprises a housing 10; the water tank 12 and the formula container 14 are arranged in the housing 10 (see Fig. 2). In certain embodiments the water tank 12 and/or the formula container 14 are arranged outside the housing 10 of the baby formula making device. The water tank 12 is preferably adapted for receiving sterilized water sufficient for preparing multiple portions of baby formula; the capacity of the water tank 12 is preferably at least 0.5 litre, more preferably at least 1 litre.

The heating unit adapted for heating the sterilized water is preferably arranged connected to the water tank 12, more preferably it is arranged connected to a first conduit 11 interconnecting the water tank 12 and the feed opening 38. If the heating unit is connected to the water tank 12 it usually heats up the entire contents of the water tank 12, while in case the heating unit is connected to the first conduit 11 it only heats up the water flowing through the first conduit 11, i.e. the amount of water required for making the baby formula, which typically requires less time than heating the entire contents of the water tank 12. The water is heated to body temperature by the heating unit so the baby formula is prepared at a temperature at which it can be consumed instantly.

The formula is stored in the formula container 14 in a form known from the prior art, preferably in a powdered, concentrate, liquid or gel form, from which ready-to-consume baby formula can be prepared by adding water.

In a manner depicted in Fig. 2, the feed opening 38 comprises separate respective openings for feeding formula and water, ensuring that the formula and the water can only come into contact and mix with each other in the baby formula container 40 attached to the device, so ready-to-consume baby formula (that can spoil quickly and has to be removed regularly) does not form in the device. The baby formula container 40 is preferably the container portion of a baby bottle, or other container suitable for storing ready-to-consume baby formula.

The baby formula making device according to the invention further comprises a rotatable member 16 adapted for engaging a neck portion 42 of the baby formula container 40 such that it the neck portion 42 fits the feed opening 38, and a motor controlled to drive the rotatable member 16 such that the latter mixes the formula and the water fed into the baby formula container 40. By fitting the neck portion 42 of the baby formula container 40 against the feed opening 38, the water and the formula to be fed through the feed opening 38 can be fed into the baby formula container 40 in their entirety. The rotatable member 16 preferably has a threaded configuration, to which member a baby formula container 40 having a threaded neck portion 42 is connectable. In another preferred embodiment, the rotatable member 16 has a configuration enabling it to be connected in grooves disposed on the neck portion 42 of the baby formula container 40.

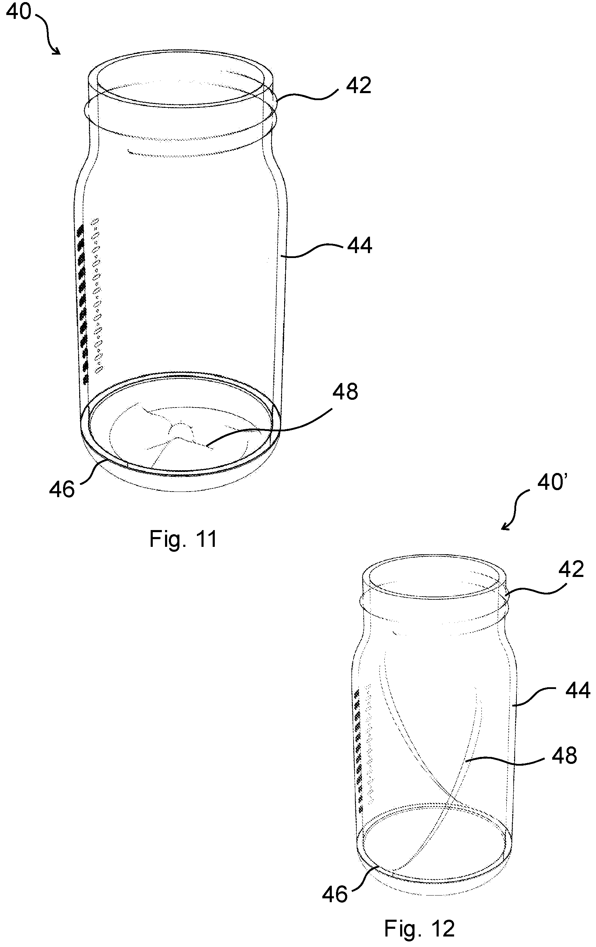

Once turned on, the motor drives the rotatable member 16 causing the baby formula container 40 affixed to the rotatable member 16 to also rotate. Due to the effect of the rotation of the baby formula container 40 the water and the formula fed into the baby formula container 40 are mixed, forming ready-to-consume, homogeneous baby formula. The efficacy of mixing may be further improved by the shape of the baby formula container 40. Shorter mixing times of the formula and the water can be achieved with the same rotation parameters by applying a baby formula container 40 comprising vortex generator members. Respective preferred embodiments of the baby formula container 40 are depicted by way of example in Fig. 11 and in Fig. 12.

In the preferred embodiment according to Fig. 1, the baby formula making device comprises a first cover 20 adapted for closing off the region around the rotatable member 16 and the baby formula container 40 attached thereto. Thereby, the first cover 20 prevents the rotating rotatable member 16 and the baby formula container 40 from contacting a foreign object and from being blocked in movement, while accidents caused by touching the rotating components can also be prevented. The first cover 20 can of course be opened or it has a removable configuration, enabling the baby formula container 40 to be attached to or removed from the device.

The baby formula making device preferably further comprises a second cover 22 and a third cover 24 that are adapted for covering the water tank 12 and the formula container 14 in the preferred embodiment according to Fig. 1. The second cover 22 and the third cover 24 is preferably configured such that they can be removed or opened, enabling the replacement or refilling of the water tank 12 and the formula container 14.

In the preferred embodiment according to Fig. 1 the baby formula making device comprises a collecting container 26 that is preferably arranged under the feed opening 38 and is adapted for collecting the formula falling from the feed opening 38 or the water flowing therefrom, for example in such a case wherein the device is operated without connecting a baby formula container 40 or wherein the baby formula container 40 is connected incorrectly. The top portion of the collecting container 26 preferably comprises perforations 28 adapted for letting the formula or water to enter into the inside of the collecting container 26. The collecting container 26 can preferably be detached from the baby formula making device and can be emptied, cleaned or washed separately.

In the preferred embodiment depicted in Fig. 1, the housing 10 of the baby formula making device comprises a display 18 that is arranged on the top side of the housing 10 in the embodiment according to Fig. 1. The display 18 can be implemented as any display type known in the art, for example, as a LED touch screen. The display 18 preferably also functions as an operator interface that can be used for entering instructions related to the baby formula preparation process, for example to the amount of the baby formula to be prepared. The baby formula making device preferably further comprises a status indicator 30 adapted for indicating the status of the device and/or of the baby formula being prepared, for example indicates the switched-on state of the device by different-colour illumination.

The baby formula making device is preferably equipped with a cable 32 adapted for providing, preferably from a power outlet, the electric power required for the operation of the heating unit and the motor. In other embodiments of the device, electric power required for operating the device can be provided by a rechargeable or non-rechargeable battery.

In Fig. 2 the sectional view of the preferred embodiment according to Fig. 1 is shown, depicting a preferred internal structural arrangement of the device. In the preferred embodiment according to Fig. 2 the formula container 14 is arranged above the water tank 12. Between the water tank 12 and the feed opening 38 a first conduit 11 is arranged, through which water can be fed into the baby formula container 40. The first conduit 11 is preferably connected to the water tank 12, preferably to the bottom of the water tank 12, through a first valve 34. The first valve 34 is adapted for preventing water held in the water tank 12 from entering the first conduit 11 when the baby formula making device is not in operation. The first valve 34 can be of any type known from prior art that is suited for the flow control of liquids. Optionally, a filter adapted for filtering the water to be fed into the baby formula container 40 is arranged at the outlet of the water tank 12 and/or in the first conduit 11. The filter can be of any filter type known in the art.

The formula container 14 arranged above the water tank 12 is preferably arranged at least partially above the feed opening 38. The formula container 14 is connected to the feed opening 38 by a second conduit 13; in the preferred embodiment according to Fig. 2 the second conduit 13 is arranged vertically and allows the contents of the formula container 14 to be fed into the baby formula container 40, even by gravity feed. In further preferred embodiments the second conduit 13 is arranged at a non-zero angle with respect to the vertical direction, so that the formula slides through it and through the feed opening 38 and into the baby formula container 40. A second valve 36 adapted for preventing formula from inadvertently dropping out from the formula container 14 is arranged between the formula container 14 and the second conduit 13. The second valve 36 can be implemented by applying any type of valve known in the art, preferably a valve or membrane that is permeable to materials having a consistency corresponding that of the formula, for example powder, concentrate, or gel. The formula container 14 is preferably arranged in the baby formula making device at an angle with respect to the horizontal direction, preferably at an angle not greater than 10°, more preferably at an angle not greater than 5°, such that the formula container 14 preferably inclines towards the second conduit 13, whereby the formula can be poured out from the formula container 14 without residue. The second conduit 13 preferably has larger cross-sectional area than the first conduit 11 such that any residual formula remaining in the second conduit 13 can be removed therefrom.

The formula container 14 preferably comprises a unique identifier, for example an RFID tag that is characteristic of the particular formula stored in the formula container 14. The baby formula making device is able to recognise this unique identifier and to accordingly measure the quantities of water and formula in order to prepare the desired quantity of baby formula. The user therefore has to specify only the desired amount of baby formula, while all the other tasks, for example measuring the right amount of formula and water by using the mixing ratios corresponding to the applied formula, setting the required temperature, and subsequently mixing the formula and the water are performed by the baby formula making device automatically, without any further user intervention.

The rotatable member 16 is adapted to fittingly attach the baby formula container 40 to the feed opening 38; in the preferred embodiment according to the figure the rotatable member 16 is configured to encompass the feed opening 38. The rotatable member 16 first engages the baby formula container 40, and then, driven by the motor connected thereto, the rotatable member 16 rotates the baby formula container 40 such that the content of the baby formula container 40 is mixed.

Fig. 2 shows a first cover 20 that is adapted for covering a first side (its front side as shown in the figure) of the baby formula making device and, as it was described in relation to Fig. 1, protects the feed opening 38 and the rotatable member 16 from contamination, while it also prevents the rotatable member 16 and the baby formula container 40 connected thereto from being blocked in their rotation from external effects, for example by a hand or an external object, while it also protects the user's hands against injury. The bottom portion of the first cover 20 is configured to fit against the collecting container 26. In the figure there can also be seen perforations 28 disposed at the top portion of the collecting container 26 that (as it was described in relation to Fig. 1) are adapted for enabling the formula or water falling from above to enter the collecting container 26.

Furthermore, in Fig. 2 it can be seen at the backside of the baby formula making device a second cover 22 and a third cover 24 adapted for covering the water tank 12 and the formula container 14, respectively, and a cable 32 adapted for providing power supply.

The features of the structural components depicted in Fig. 2 correspond to the features discussed above in relation to Fig. 1.

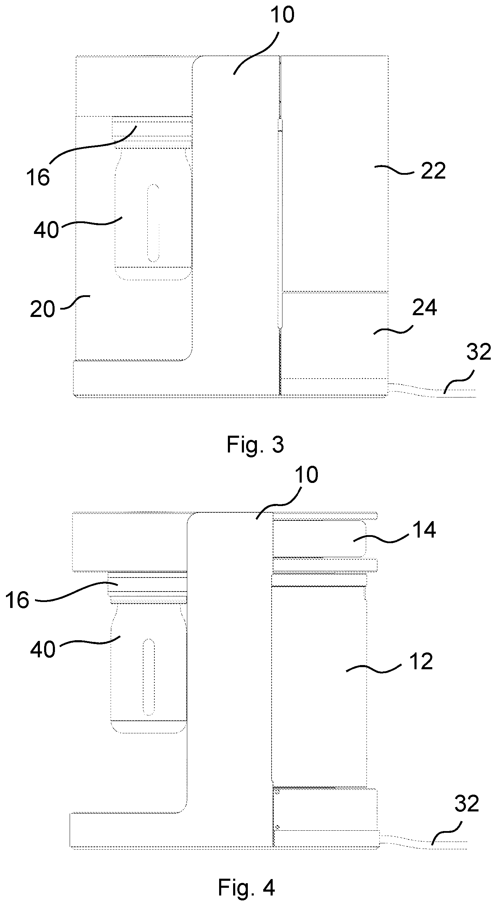

Figs. 3-5 depict preferred embodiments of the baby formula making device in side elevation view. The preferred embodiment according to Fig. 3 corresponds to the preferred embodiments described in detail in relation to Figs. 1 and 2. In Fig. 3 there can be seen a first cover 20 arranged at the front side of the baby formula making device and the rotatable member 16 - arranged preferably behind the first cover 20 - with the baby formula container 40 affixed thereto. At the backside of the baby formula making device there are arranged a second cover 22 and a third cover 24 that are adapted for covering the water tank 12 and the formula container 14 and are attached to the housing 10, and a cable 32 adapted for providing power supply. The features and potential alternative implementations of the structural components depicted in Fig. 3 correspond to those discussed above in relation to Figs. 1 and 2.

Although Fig. 4 depicts the preferred embodiment of Fig. 3 without the covers 20, 22, 24, it can also be considered a further preferred embodiment. Like with Fig. 2, the formula container 14 is arranged preferably at the back portion of the baby formula making device, above the water tank 12.

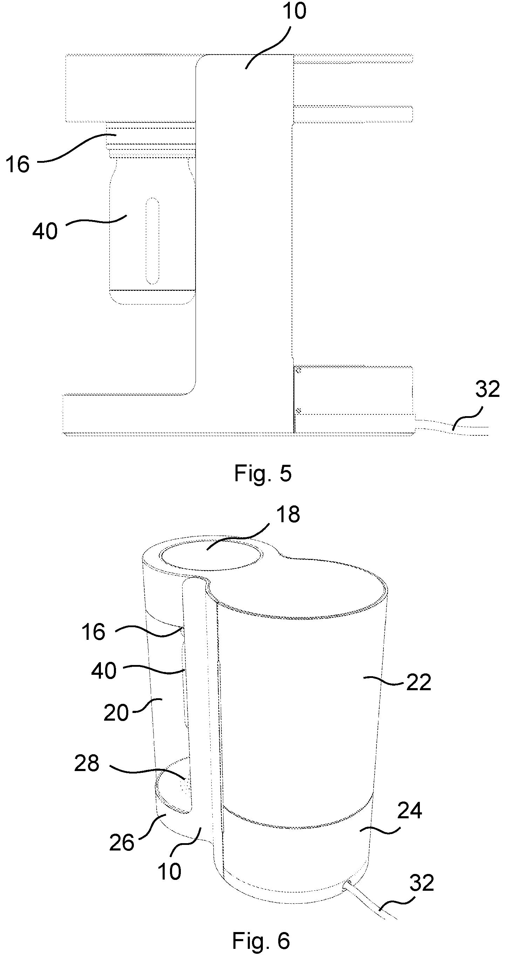

Fig. 5 shows the preferred embodiment according to Fig. 4 without the water tank 12 and the formula container 14. In Figs. 4 and 5 the rotatable member 16 encompassing the feed opening 38 and the baby formula container 40 attached thereto are arranged at the front side of the baby formula making device. The features and potential alternative implementations of the structural components depicted in Figs. 4 and 5 correspond to those discussed above in relation to Figs. 1 and 2.

Fig. 6 illustrates the preferred embodiment according to Fig. 1 in another (rear) perspective view. In the figure there can be seen a second cover 22 and a third cover 24 (both in a closed state) that are arranged at the rear portion of the housing 10 of the device and are adapted for covering the water tank 12 and the formula container 14, the figure also showing the cable 32. The display 18 is arranged at the top portion of the housing 10. In Fig. 6 there can also be seen, in a closed state, a first cover 20 arranged at the first (front) side of the housing 10, behind which first cover 20 the rotatable member 16 and the baby formula container 40 attached thereto are arranged. In the preferred embodiment according to the figure, the bottom portion of the first cover 20 is fitted against the collecting container 26. The features and potential alternative implementations of the structural components depicted the figure correspond to those discussed above in relation to Figs. 1 and 2.

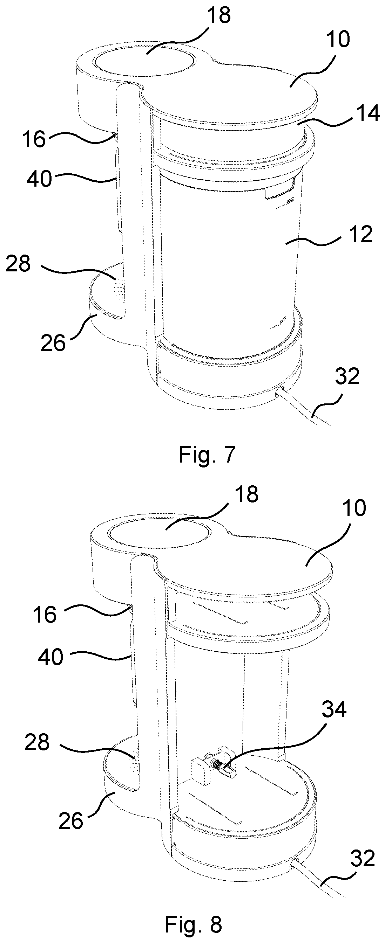

In Figs. 7 and 8 the baby formula making device is shown in the view also shown in Fig. 6 but without the covers 20, 22, and 24, constituting a further preferred embodiment of the baby formula making device. In Fig. 7, a preferred arrangement of the water tank 12 and the formula container 14 - that can be removed from their position in the housing 10, can be replaced and refilled - can be seen without the covers 22 and 24 disposed at the rear portion of the baby formula making device (i.e. with said covers being removed). In Fig. 8, the water tank 12 and the formula container 14 are removed from the baby formula making device. The water tank 12 and the formula container 14 are arranged in a manner described above in relation to Fig. 2. Like in Fig. 6, in Figs. 7 and 8 there can also be seen the rotatable member 16 with a baby formula container 40 connected thereto, and the collecting container 26 with the perforations 28. In Fig. 8 there can also be seen a preferred embodiment of a first valve 34 connected to the water tank 12 (i.e. to the bottom portion of said water tank 12), through which water can be fed from the water tank 12 to the baby formula container 40 as it was described above in relation to Fig. 2.

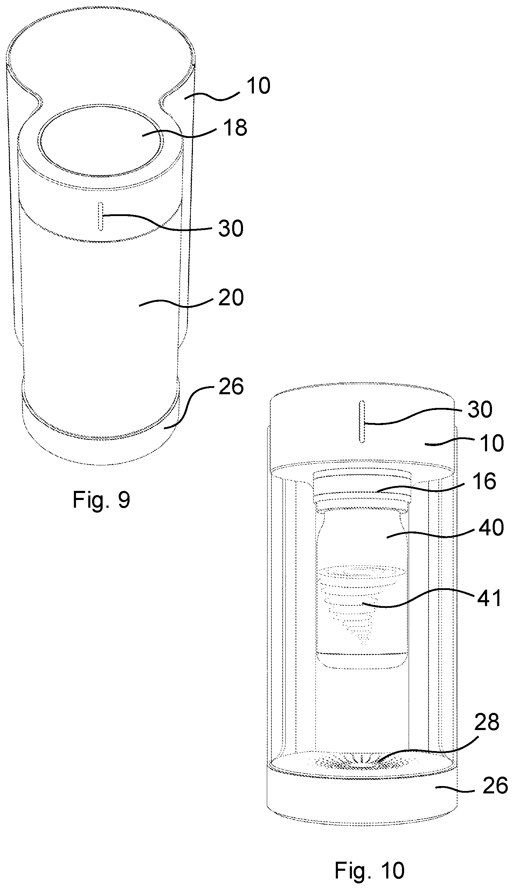

In Figs. 9 and 10 the preferred embodiment of the invention according to Fig. 1 is depicted in further (front) perspective views. In Fig. 9 at the front side of the baby formula making device there can be seen the first cover 20, wherein the bottom portion thereof is fitted against the collecting container 26, the status indicator 30, and a display 18 disposed at the top side of the housing 10.

Fig. 10 depicts a preferred embodiment of the baby formula making device according to the invention wherein a first cover 20 is not included, or wherein the first cover 20 is removed such that the rotatable member 16 and the baby formula container 40 attached thereto are visible. In Fig. 10, the vortices 41 produced in the baby formula container 40 brought into rotation by means of rotating the rotatable member 16 are depicted schematically. In Fig. 10 there can also be seen a status indicator 30 arranged on the front side of the apparatus and the collecting container 26 having the perforations 28 formed at the top portion thereof. The features and alternative implementations of the structural components depicted in Figs. 9-10 correspond to those discussed above in relation to Figs. 1 and 2.

In Fig. 11 a preferred embodiment of the baby formula container 40 is shown. The baby formula container 40 is preferably implemented as a baby bottle for feeding infants that is expediently made of glass or plastic, and is adapted for receiving ready-to-consume baby formula.

The baby formula container 40 comprises a neck portion 42 allowing for securing a closing member, a side wall 44 adjacent to the neck portion 42, and a base portion 46 that is adapted for delimiting the side wall 44 at the bottom. The neck portion 42 preferably has a threaded configuration that allows for attaching a closing member, preferably a feeding nipple or cap to the neck portion 42.

The baby formula container 40 comprises a vortex generator member 48 that is adapted for generating vortices in the liquid, preferably water, received in the baby formula container 40, upon the rotation of the baby formula container 40, thereby mixing the components of the liquid and/or the substances, for example formula, that have been added to the liquid. The vortices generated by the vortex generator member 48 contribute to the effective mixing of the substances, preferably the formula and the water, fed into the baby formula container 40. The vortex generator member 48 is preferably formed at the side wall 44 and/or the base portion 46 of the baby formula container 40. The baby formula container 40 may preferably comprise more than one vortex generator members 48 that are located on the side wall 44 and/or the base portion 46. The vortex generator member 48 is preferably implemented as a shaped protrusion formed of the material of the side wall 44 and/or the base portion 46 of the baby formula container 40.

In the preferred embodiment according to Fig. 11 the baby formula container 40 comprises a vortex generator member 48 located on the base portion 46. The vortex generator member 48 preferably has a shape that does not significantly reduce the cleanability of the baby formula container 40 and ensures splash-proof mixing. By "splash-proof" mixing it is meant that during the mixing process the material fed into the container does not rise above the level of a neck opening of the baby formula container 40.

Fig. 12 illustrates another preferred embodiment of the baby formula container 40', wherein the vortex generator member 48 is located on the side wall 44. In the baby formula container 40' according to Fig. 12 there are two vortex generator members 48 arranged opposite to each other on the side wall 44. The features of the vortex generator member 48 described in relation to Fig. 11 also apply to the vortex generator member 48 according to Fig. 12.

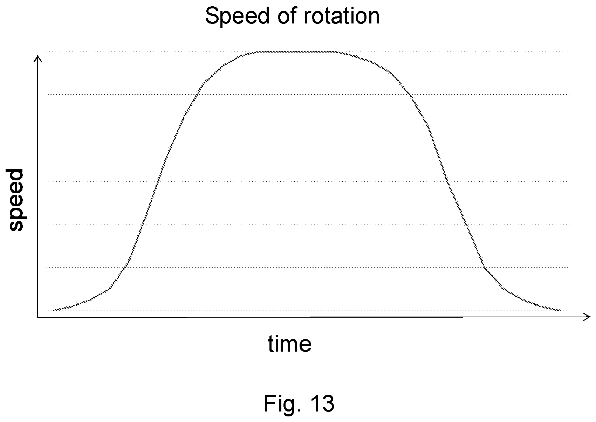

In Fig. 13 a diagram illustrating a preferred rotational speed curve of the motor of the baby formula making device according to the invention is shown. To provide a "splash-proof" mixing of the water and the formula in the baby formula container 40, 40' the rotational speed of the motor of the baby formula making device needs to be controlled. In order to prevent splashes and spills, the speed of rotation must not be changed abruptly, i.e. the speed has to change according to a sufficiently smooth function. It is also preferable to avoid changing the direction of rotation as it may cause an abrupt change of the rotational speed. At the start of the mixing process the rotational speed of the motor is preferably increased gradually, and at the end of the process it has to be reduced to zero also in a gradual fashion. In a preferred embodiment, during the mixing process the rotational speed of the motor periodically decreases and increases, for example according to a speed curve similar to the shape of a sine function. In addition to these examples, the rotational speed may be controlled according to various other curves.

The preferred embodiments of the baby formula making device illustrated in Figs. 1-10 preferably comprise a control unit that is adapted for measuring and dispensing specific amounts of water and formula required for preparing the given amount of baby formula, for controlling the heating of the water up to the required temperature, and for controlling the motor adapted for mixing the ingredients of the baby formula, while it is also adapted for monitoring the amount of water and formula still remaining in the baby formula making device. The control unit is preferably adapted for monitoring and logging the operation and use of the device, i.e. the amount of baby formula consumed by the infant/baby, and, applying artificial intelligence, it evaluates the baby's feeding habits and forecasts the time of the next feeding and also estimates the amount of baby formula required for it. The logged data and the estimates can preferably also be transferred to and displayed on a device, for example a smartphone, that is connected to the control unit via a wireless data connection.

The invention also relates to a method for making baby formula by applying the baby formula making device according to claim 1. The method comprises the steps of attaching an empty, preferably sterilized baby formula container 40, 40' to the baby formula making device, feeding into the baby formula container 40, 40' an amount of the formula that is stored in the formula container 14 of the baby formula making device that corresponds to the specific amount of baby formula to be prepared, and feeding into the baby formula container 40, 40', after applying heating, an amount of the sterilized water stored in the water tank 12 of the baby formula making device that corresponds to the specific amount of baby formula to be prepared.

The method also comprises rotating the baby formula container 40, 40' attached to the baby formula making device by controlling the drive motor thereof, whereby the baby formula and the water fed into the baby formula container 40, 40' are mixed.

In the course of the method the motor is controlled applying a controlled speed rise and fall rate, such that a splash-proof mixing of the substances fed into the baby formula container 40, 40' is provided.

The manner of industrial application of the invention follows from the characteristics of the technical solution described above. As can be seen from the above, the invention achieves its objects in a very preferable manner compared to the prior art solutions.

The invention is, of course, not limited to the preferred embodiments described in details above, but further variants, modifications and developments are possible within the scope of protection determined by the claims.

### List of reference signs

- 10: housing
- 11: (first) conduit
- 12: water tank
- 13: (second) conduit
- 14: formula container
- 16: rotatable member
- 18: display
- 20: (first) cover
- 22: (second) cover
- 24: (third) cover
- 26: collecting container
- 28: perforations
- 30: status indicator
- 32: cable
- 34: (first) valve
- 36: (second) valve
- 38: feed opening
- 40, 40': baby formula container
- 41: vortices
- 42: neck portion
- 44: side wall
- 46: base portion
- 48: vortex generator member(s)

## Claims

1. A baby formula making device comprising
- a water tank (12) adapted for storing sterilized water,
- a heating unit adapted for heating water stored in the water tank (12),
- a formula container (14) adapted for storing a formula, and
- a feed opening adapted for feeding the heated water and the formula directly into a baby formula container (40, 40') connectable to the baby formula making device,
**characterised by** further comprising
- a rotatable member (16) adapted for engaging a neck portion (42) of the baby formula container (40, 40') such that the neck portion (42) fits the feed opening (38), and
- a motor adapted for driving the rotatable member (16) for mixing the formula and water fed into the baby formula container (40, 40').

2. The baby formula making device according to claim 1, **characterised in that** it comprises a motor adapted to be controlled to drive the rotatable member (16) with a controlled rise and fall rate, providing a splash-proof mixing of the formula and water fed into the baby formula container (40, 40').

3. The baby formula making device according to claim 1 or 2, **characterised in that** it comprises a motor adapted to continuously unidirectionally rotate the rotatable member (16) for mixing the formula and water fed into the baby formula container (40, 40').

4. The baby formula making device according to any of claims 1-3, **characterised in that** it comprises a motor adapted to rotate the rotatable member (16) by a sinusoidal speed profile.

5. The baby formula making device according to any of claims 1-4, **characterised in that** it comprises
- a first conduit (11) adapted for feeding heated water and being arranged between the water tank (12) and the feed opening (38), and
- a second conduit (13) adapted for feeding the formula and being arranged between the formula container (14) and the feed opening (38).

6. The baby formula making device according to claim 5, **characterised in that** the baby formula container (40, 40'), the water tank (12) and the first conduit (11) connected thereto, as well as the baby formula container (40, 40'), the formula container (14) and the second conduit (13) connected thereto constitute a closed system enabling sterile feeding.

7. The baby formula making device according to any of claims 1-6, **characterised in that** it further comprises a removable first cover (20) adapted for covering an area comprising the rotatable member (16) and the baby formula container (40, 40') connected thereto, and/or a removable second cover (22) adapted for covering the water tank (12) and the formula container (14).

8. The baby formula making device according to any of claims 1-7, **characterised in that** it comprises a display (18) adapted for displaying a status of the device and/or a status of the baby formula being prepared.

9. The baby formula making device according to any of claims 1-8, **characterised in that** it comprises an artificial intelligence-based control unit that is adapted for forecasting the duration of the baby formula preparation process, for monitoring formula consumption habits, and/or for communicating with a communications device, preferably with a smartphone.

10. A method for making baby formula by applying the baby formula making device according to claim 1, comprising the steps of
- attaching an empty baby formula container (40, 40') to the rotatable member (16) of the baby formula making device,
- feeding into the baby formula container (40, 40') an amount of formula from the formula container (14) of the baby formula making device corresponding to a specific amount of baby formula to be made, and
- feeding into the baby formula container (40, 40'), after applying heating, an amount of sterilized water from the water tank (12) of the baby formula making device corresponding to the specific amount of baby formula to be made,
**characterised by**
- rotating the baby formula container (40, 40') by controlling a drive of a motor, whereby mixing the formula and the water fed into the baby formula container (40, 40').

11. The method according to claim 10, **characterised by** controlling the motor by applying a controlled speed rise and fall rate, such that splash-proof mixing of the substances fed into the baby formula container (40, 40') is provided.

## Patentansprüche

1. Säuglingsnahrungs-Zubereitungsvorrichtung, umfassend:
- einen Wassertank (12), angepasst für die Aufnahme von sterilisiertem Wasser,
- eine Heizeinheit, angepasst zum Erwärmen des im Wassertank (12) aufgenommenen Wassers,
- einen Nahrungsbehälter (14), angepasst zum Aufnehmen einer Nahrung, und
- eine Zuführöffnung, angepasst zum Zuführen des erwärmten Wassers und der Nahrung direkt in einen Säuglingsnahrungsbehälter (40, 40'), der mit der Säuglingsnahrungs-Zubereitungsvorrichtung verbindbar ist,
**dadurch gekennzeichnet, dass** sie ferner umfasst:
- ein drehbares Element (16), angepasst zum Eingreifen in einen Stutzenabschnitt (42) des Säuglingsnahrungsbehälters (40, 40'), so dass der Stutzenabschnitt (42) in die Zuführöffnung (38) passt, und
- einen Motor, angepasst zum Antreiben des drehbaren Elements (16) zum Mischen der in den Säuglingsnahrungsbehälter (40, 40') zugeführten Nahrung und des Wassers.

2. Säuglingsnahrungs-Zubereitungsvorrichtung nach Anspruch 1, **dadurch gekennzeichnet, dass** sie einen Motor umfasst, angepasst gesteuert zu werden, um das drehbare Element (16) mit einer gesteuerten Anstiegs- und Abfallgeschwindigkeit anzutreiben, was eine spritzsichere Vermischung der in den Säuglingsnahrungsbehälter (40, 40') zugeführten Nahrung und des Wassers bewirkt.

3. Säuglingsnahrungs-Zubereitungsvorrichtung nach Anspruch 1 oder 2, **dadurch gekennzeichnet, dass** sie einen Motor umfasst, angepasst zum kontinuierlichen Drehen des drehbaren Elements (16) in eine Richtung zum Mischen der in den Säuglingsnahrungsbehälter (40, 40') zugeführten Nahrung und des Wassers.

4. Säuglingsnahrungs-Zubereitungsvorrichtung nach einem der Ansprüche 1 bis 3, **dadurch gekennzeichnet, dass** sie einen Motor umfasst, angepasst zum Drehen des drehbaren Elements (16) mit einem sinusförmigen Geschwindigkeitsprofil.

5. Säuglingsnahrungs-Zubereitungsvorrichtung nach einem der Ansprüche 1 bis 4, **dadurch gekennzeichnet, dass** sie umfasst:
- eine erste Leitung (11), angepasst zum Zuführen von erwärmtem Wasser und angeordnet zwischen dem Wassertank (12) und der Zuführöffnung (38), und
- eine zweite Leitung (13), angepasst zum Zuführen der Nahrung und angeordnet zwischen dem Nahrungsbehälter (14) und der Zuführöffnung (38).

6. Säuglingsnahrungs-Zubereitungsvorrichtung nach Anspruch 5, **dadurch gekennzeichnet, dass** der Säuglingsnahrungsbehälter (40, 40'), der Wassertank (12) und die damit verbundene erste Leitung (11) sowie der Säuglingsnahrungsbehälter (40, 40'), der Nahrungsbehälter (14) und die damit verbundene zweite Leitung (13) ein geschlossenes System bilden, das ein steriles Füttern ermöglicht.

7. Säuglingsnahrungs-Zubereitungsvorrichtung nach einem der Ansprüche 1 bis 6, **dadurch gekennzeichnet, dass** sie ferner eine abnehmbare erste Abdeckung (20), angepasst zum Abdecken eines Bereichs umfassend das drehbare Element (16) und den damit verbundenen Säuglingsnahrungsbehälter (40, 40'), und/oder eine abnehmbare zweite Abdeckung (22), angepasst zum Abdecken des Wassertanks (12) und des Nahrungsmittelbehälters (14), umfasst.

8. Säuglingsnahrungs-Zubereitungsvorrichtung nach einem der Ansprüche 1 bis 7, **dadurch gekennzeichnet, dass** sie eine Anzeige (18) umfasst, angepasst zum Anzeigen eines Status der Vorrichtung und/oder eines Status der zubereiteten Säuglingsnahrung.

9. Säuglingsnahrungs-Zubereitungsvorrichtung nach einem der Ansprüche 1 bis 8, **dadurch gekennzeichnet, dass** sie eine auf künstlicher Intelligenz basierende Steuereinheit umfasst, die für die Vorhersage der Dauer des Säuglingsnahrungs-Zubereitungsprozesses, für die Überwachung der Nahrungsverbrauchsgewohnheiten und/oder für die Kommunikation mit einer Kommunikationsvorrichtung, vorzugsweise mit einem Smartphone, angepasst ist.

10. Verfahren zum Zubereiten von Säuglingsnahrung durch Anwendung der Säuglingsnahrungs-Zubereitungsvorrichtung nach Anspruch 1, umfassend die Schritte zum:
- Anbringen eines leeren Säuglingsnahrungsbehälters (40, 40') am drehbaren Element (16) der Säuglingsnahrungs-Zubereitungsvorrichtung,
- Zuführen einer einer bestimmten Menge an zuzubereitender Säuglingsnahrung entsprechenden Menge an Nahrung aus dem Nahrungsbehälter (14) der Säuglingsnahrungs-Zubereitungsvorrichtung in den Säuglingsnahrungsbehälter (40, 40'), und
- Zuführen einer der bestimmten Menge an zuzubereitender Säuglingsnahrung entsprechenden Menge an sterilisiertem Wasser aus dem Wassertank (12) der Säuglingsnahrungs-Zubereitungsvorrichtung in den Säuglingsnahrungsbehälter (40, 40'), nachdem dieses erwärmt wurde,
**gekennzeichnet durch**
- Drehen des Säuglingsnahrungsbehälters (40, 40') durch Steuern eines Antriebs eines Motors, wodurch die Nahrung und das in den Babynahrungsbehälter (40, 40') zugeführte Wasser gemischt werden.

11. Verfahren nach Anspruch 10, **gekennzeichnet durch** Steuern des Motors durch Anwenden einer gesteuerten Drehzahlanstiegs- und -abfallgeschwindigkeit, so dass eine spritzsichere Vermischung der in den Babynahrungsbehälter (40, 40') zugeführten Stoffe gegeben ist.

## Revendications

1. Dispositif de réalisation de lait maternisé comprenant
- un réservoir d'eau (12) adapté pour stocker de l'eau stérilisée,
- une unité de chauffage adaptée pour chauffer l'eau stockée dans le réservoir d'eau (12),
- un contenant (14) de préparation pour nourrisson adapté pour stocker une préparation pour nourrisson, et
- une ouverture d'alimentation adaptée pour alimenter directement en eau chauffée et en préparation pour nourrisson un contenant (40, 40') de lait maternisé raccordable au dispositif de réalisation de lait maternisé,
**caractérisé en ce qu'**il comprend en outre
- un organe rotatif (16) adapté pour engager une portion de col 42) du contenant (40, 40') de lait maternisé de sorte que la portion de col (42) s'adapte à l'ouverture d'alimentation (38), et
- un moteur adapté pour entraîner l'organe rotatif (16) pour mélanger la préparation pour nourrisson et l'eau alimentées dans le contenant (40, 40') de lait maternisé.

2. Dispositif de réalisation de lait maternisé selon la revendication 1, **caractérisé en ce qu'**il comprend un moteur adapté pour être commandé afin d'entraîner l'organe rotatif (16) avec un taux de montée et de descente commandé, assurant un mélange à l'épreuve des éclaboussures de la préparation pour nourrisson et de l'eau alimentées dans le contenant (40, 40') de lait maternisé.

3. Dispositif de réalisation de lait maternisé selon la revendication 1 ou 2, **caractérisé en ce qu'**il comprend un moteur adapté pour faire tourner en continu et de manière unidirectionnelle l'organe rotatif (16) pour mélanger la préparation pour nourrisson et l'eau alimentées dans le contenant (40, 40') de lait maternisé.

4. Dispositif de réalisation de lait maternisé selon l'une quelconque des revendications 1 à 3, **caractérisé en ce qu'i**l comprend un moteur adapté pour faire tourner l'organe rotatif (16) selon un profil de vitesse sinusoïdal.

5. Dispositif de réalisation de lait maternisé selon l'une des revendications 1 à 4, **caractérisé en ce qu'**il comprend
- un premier conduit (11) adapté pour l'alimentation en eau chauffée et qui est agencé entre le réservoir d'eau (12) et l'ouverture d'alimentation (38), et
- un deuxième conduit (13) adapté pour l'alimentation en préparation pour nourrisson et qui est agencé entre le contenant (14) de préparation pour nourrisson et l'ouverture d'alimentation (38).

6. Dispositif de réalisation de lait maternisé selon la revendication 5, **caractérisé en ce que** le contenant (40, 40') de lait maternisé, le réservoir d'eau (12) et le premier conduit (11) qui lui sont raccordés, ainsi que le contenant (40, 40') de lait maternisé, le contenant (14) de préparation pour nourrisson et le deuxième conduit (13) qui lui sont raccordés constituent un système fermé permettant une alimentation stérile.

7. Dispositif de réalisation de lait maternisé selon l'une des revendications 1 à 6, **caractérisé en ce qu'**il comprend en outre un premier couvercle amovible (20) adapté pour recouvrir une zone comprenant l'élément rotatif (16) et le contenant (40, 40') de lait maternisé qui lui est raccordé, et/ou un deuxième couvercle amovible (22) adapté pour recouvrir le réservoir d'eau (12) et le contenant (14) de préparation pour nourrisson.

8. Dispositif de réalisation de lait maternisé selon l'une des revendications 1 à 7, **caractérisé en ce qu'**il comprend un affichage (18) adapté pour afficher un état du dispositif et/ou un état du lait maternisé en cours de préparation.

9. Dispositif de réalisation de lait maternisé selon l'une des revendications 1 à 8, **caractérisé en ce qu'**il comprend une unité de commande basée sur l'intelligence artificielle, qui est adaptée pour prévoir la durée du processus de préparation de lait maternisé, pour surveiller des habitudes de consommation de lait maternisé, et/ou pour communiquer avec un dispositif de communication, de préférence un téléphone intelligent.

10. Procédé de réalisation de lait maternisé en employant le dispositif de réalisation de lait maternisé selon la revendication 1, comprenant les étapes suivantes
- fixer un contenant (40, 40') de lait maternisé vide à l'organe rotatif (16) du dispositif de réalisation de lait maternisé,
- alimenter le contenant (40, 40') de lait maternisé avec une quantité de préparation pour nourrisson provenant du contenant (14) de préparation pour nourrisson du dispositif de réalisation de lait maternisé, correspondant à une quantité spécifique de lait maternisé à réaliser, et
- alimenter le contenant (40, 40') de lait maternisé, après application de chauffage, avec une quantité d'eau stérilisée provenant du réservoir d'eau (12) du dispositif de réalisation de lait maternisé, correspondant à la quantité spécifique de lait maternisé à réaliser,
**caractérisé par**
- faire tourner le contenant (40, 40') de lait maternisé en commandant un entraînement d'un moteur, ce qui permet de mélanger la préparation pour nourrisson et l'eau alimentées dans le contenant (40, 40') de lait maternisé.

11. Procédé selon la revendication 10, **caractérisé par** la commande du moteur en appliquant un taux de montée et de descente de vitesse commandé, de manière à garantir un mélange à l'épreuve des éclaboussures des substances alimentant le contenant (40, 40') de lait maternisé.
